# EUROPEAN PATENT APPLICATION

(11) **EP 0 691 616 A1**
(43) Date of publication of application: **10.01.1996**
(21) Application number: 95304288.4
(22) Date of filing: 20.06.1995
(51) Int. Cl.: G06F 13/16

(54) **RAM and ROM control unit**

(30) Priority: 08.07.1994 US 273010
(71) Applicant: ADVANCED MICRO DEVICES INC., Sunnyvale, California 94088-3453 (US)
(72) Inventor: MacDonald, James R., Buda, Texas 78610 (US); Gephardt, Douglas D., Austin, Texas 78748 (US); Mudgett, Dan S., Austin, Texas 78749 (US)
(74) Representative: Sanders, Peter Colin Christopher

(57) **Abstract**

An integrated system is disclosed for combining the separate address and data lines for RAM and ROM together in a unified memory system. The memory system includes a memory controller that combines the functions of a RAM controller and of a ROM controller into a single unit to permit address and data lines to be shared, thereby reducing pin counts in the integrated system. The memory controller includes a cycle and address decoder that receives addresses from the local bus and compares the addresses to information stored in configuration registers to determine if the address is directed to either the RAM array or the ROM array. The cycle and address decoder also determines whether a read cycle or a write cycle is requested. In response to detecting an address to RAM or ROM, the cycle and address decoder transmits control signals to either the RAM or ROM controller, and if a read cycle is requested, enables a data buffer interface to latch in the data signal from the local bus. The controllers control the operation of an address multiplexer, to insure that the address is properly configured for the particular memory array. In addition, the controllers generate the necessary control signals for the particular memory array, and provide timing signals to the address multiplexer and the data buffer interface to insure proper timing during read and write cycles.

## Description

The present invention relates generally to the transfer of data in and out of a plurality of memory units in a computer system. More particularly, this invention relates to a system for more efficiently transferring address and data signals between components in a computer system and a plurality of memory arrays. Still more particularly, the present invention relates to a computer system in which common address and data lines are used for both ROM (read only memory) and RAM (random access memory) to minimize pin counts and die-sizes.

In recent years, integrated processors have been developed to replace previously discrete microprocessors and associated peripheral devices within computer systems. An integrated processor is an integrated circuit that performs the functions of both the microprocessor and various peripheral devices such as, for example, a memory controller, a DMA controller, a timer, and a bus interface unit, among other things. The introduction of integrated processors has facilitated decreases in the overall cost, size and weight of computer systems, and has in many cases allowed improved performance characteristics of the computer systems.

A problem associated with integrated processors. however, is that as the number of peripheral functions increases, the required die-size of the integrated circuit also typically increases. Increases in the required die-size significantly increases the overall cost of the integrated processor. Similarly, as the number of peripheral functions increases, so typically does the required number of package pins. This also significantly increases the overall cost of the integrated processor. An integrated processor therefore is desirable in which the overall die-size and number of package pins are reduced without an associated compromise in the number of supported peripheral functions.

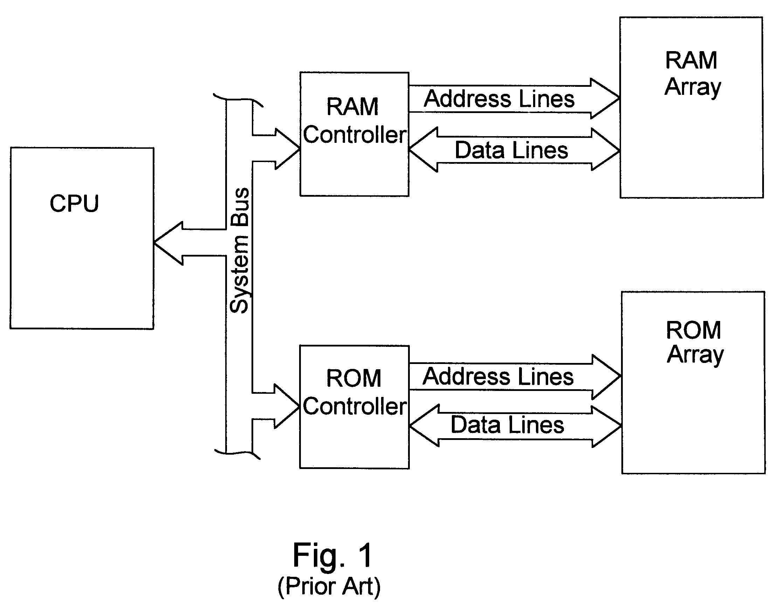

In a conventional computer system, as shown for example in Figure 1, typically both ROM and RAM have an associated control unit (shown as a RAM controller and a ROM controller) for orchestrating the transfer of address and data signals to and from the particular memory unit. The associated controllers receive address and data signals from the CPU or other peripheral components over a system bus and connect to the memory unit by a dedicated set of address and data lines.

If the RAM controller and ROM controller are included as part of an integrated processor, then implementing conventional techniques requires that separate sets of address and data lines be provided from the integrated processor to both the RAM array and the ROM array. The large number of pins required to provide address and data lines to both the RAM array and the ROM array greatly increases the number of pins required on the integrated processor. It would be advantageous, therefore, to develop an integrated processor which eliminates redundant lines to minimize pin count and die-size.

We shall describe a computer system that includes a common set of address and data lines connected between an integrated processor and both the RAM array and the ROM array to minimize pin count on the integrated processor. The computer system also combines the functions of a RAM controller and ROM controller into a single control unit in the integrated processor.

The integrated processor includes a memory control unit (MCU) which connects to a CPU core and to other integrated processor components on a CPU local bus system. The memory controller unit includes a cycle and address decoder for determining if an address request is made to either RAM or ROM, and for determining if a read or write transaction is requested. The cycle and address decoder determines if the address is made to a memory location by comparing the address to information indicative of the memory addresses, which is stored in appropriate configuration registers. The decoder provides an output signal to a data buffer interface to indicate whether the transaction comprises a read or a write cycle to control the direction in which data is transferred through the buffer interface.

In response to an address to RAM or ROM, the cycle and address decoder transmits the address signal from the local bus to a RAM/ROM address multiplexer, while providing appropriate control signals to either a RAM controller or a ROM controller, based upon whether the address is made to the RAM array or the ROM array. The respective controller then generates appropriate signals to the address multiplexer to control the manner in which the address is applied to the memory unit on the memory address lines (MADDRESS) and also provides an enable signal to the data interface buffer to drive the data signal onto memory data lines (MDATA). The controller unit also provides appropriate control signals to the selected memory unit and to memory sub-system buffers to control the timing of the memory transaction, and to select the particular memory bank being addressed.

Other objects and advantages of the invention will become apparent upon reading the following detailed description and upon reference to the accompanying drawings in which, by way of example only:
Figure 1 depicts a functional block diagram of a prior art computer system that supports both a RAM array and a ROM array;
Figure 2 depicts a functional block diagram of computer system embodying the present invention; and
Figure 3 depicts a functional block diagram of the integrated processor of Figure 2.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the appended claims.

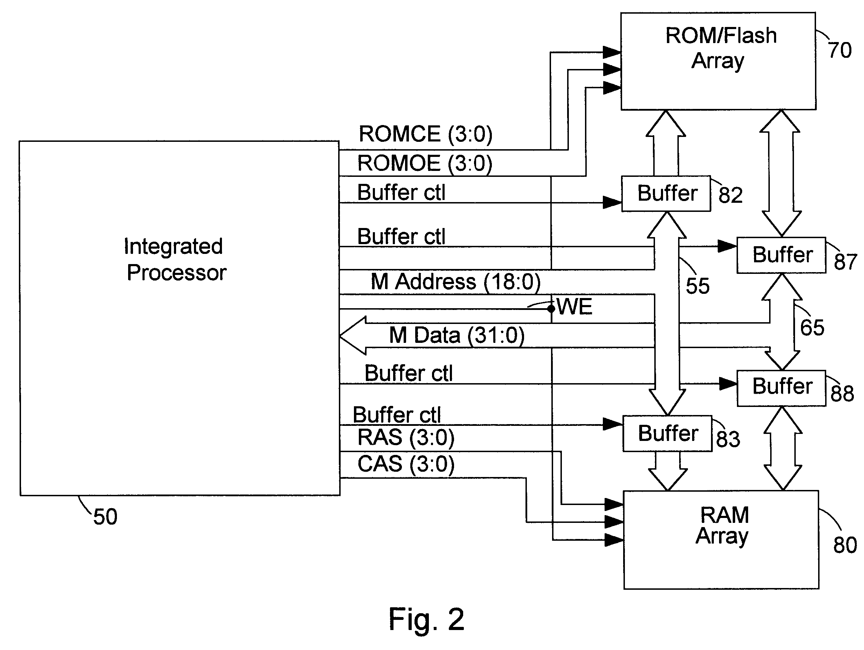

Referring now to Figure 2, a computer system generally comprises an integrated processor ("IP") 50, a ROM/Flash array 70, a RAM array 80, and a unified set of address lines 55 and data lines 65 connected between the integrated processor 50 and both the ROM/Flash array 70 and the RAM array 80. In the preferred embodiment, address buffers 82, 83 and data buffers 87, 88 are provided on the address and data lines, respectively, to buffer the address and data signals and to synchronize the transfer of the address and data signals with control signals from the IP 50.

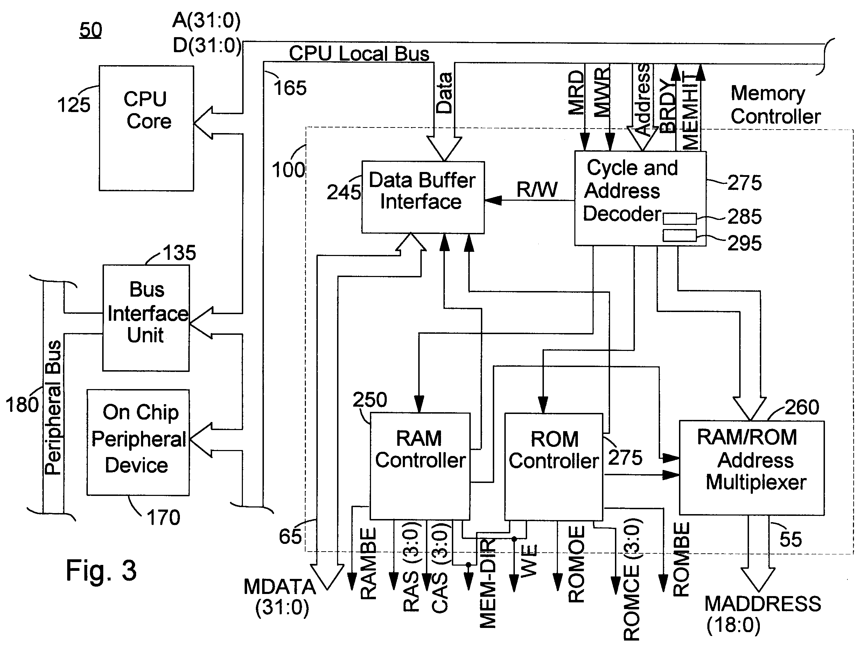

Referring now to Figures 2 and 3, the integrated processor 50 preferably includes a CPU core 125, a CPU local bus 165 coupled to the CPU core 125, a bus interface unit (BIU) 135 capable of interfacing data, address, and control signals between the local bus 135 and an external peripheral bus 180, a memory controller unit ("MCU") 100, and an on-chip peripheral device 170. Each of the illustrated components of the integrated processor 50 preferably are fabricated on a single integrated circuit and are housed within a common integrated circuit package. It should be understood, however, that the BIU 135 or other components located on the integrated processor could be located externally from the integrated processor 50 without departing from the principles of the present invention.

In the preferred embodiment, the CPU core 125 implements a model 80486 microprocessor instruction set and CPU local bus 165 comprises a model 80486-style local bus. Thus, in the preferred embodiment, the CPU local bus 165 includes a 32-bit set of data lines D(31:0), a 32-bit set of address lines A(31:0), and a set of control lines (not shown specifically). It should be understood, however, that the CPU core 125 could be configured to implement other microprocessor-type instruction sets without departing from the principles of the present invention.

The bus interface unit (BIU) 135 provides a standard interface between the CPU local bus 65 and the external bus 180. As such, the BIU 135 orchestrates the transfer of data, address, and control signals between the CPU local bus 165 and the external bus 180. The external bus 180 may comprise, for example, a PCI bus or ISA bus. In addition, the present invention can be configured to accommodate several external buses, with the BIU 135 providing an interface between these buses and the CPU local bus 165. An example of such a system may be found in our copending application 95300520.4 (TT0318), the disclosure of which is incorporated herein. In accordance with conventional techniques, the BIU 135 provides a path for memory accesses from devices located on the external bus 180.

The on-chip peripheral device 170 preferably represents any of a variety of peripheral devices that may be implemented in the integrated processor 50. For example, components such as a direct memory access controller ("DMA") or an interrupt controller may be included as an integral part of the integrated processor package. Thus, as one skilled in the art will understand, various peripherals may be provided as part of the integrated processor 50.

The ROM array 70 preferably comprises a plurality of banks of memory with widths of either 8 bits or 32 bits for non-volatile system code. Preferably, either ROM or Flash ROM devices can be implemented in the array. To accommodate Flash ROM and other similar memory devices, the array is capable of both read and write operations. In accordance with conventional techniques, write operations to Flash ROM devices can be implemented in software by manipulation of the Flash ROM embedded command codes. In the preferred embodiment, the ROM/Flash array 80 is addressed directly.

The RAM array 80 comprises the main working memory of the computer system in accordance with normal convention. The RAM 80 preferably comprises DRAM circuits configured into a plurality of banks, with each bank 32 bits (or 4 bytes) wide. In the preferred embodiment, the RAM array 80 accommodates as many as four 32-bit banks supporting up to 256 MB of RAM using Industry standard modules. As will be understood by one skilled in the art, each of the DRAM banks typically are sub-divided into "pages." The page size depends upon the size of the respective DRAM chips that are used. To enable the DRAM chips to operate with fewer connector pins, which decreases the number of chips that can be located on the system board, the DRAM chips are addressed in a multiplexed fashion; that is the address of each memory cell is transmitted in two parts. The first half of the address defines the row address and the second half defines the column address. In the preferred embodiment, the first twelve lines of the memory address bus MA(11:0) are multiplexed outputs and convey the row address location when row address strobe signals (RAS) are transmitted, and convey the column address location when column address strobe signals (CAS) are transmitted. An individual memory cell in RAM, therefore, is selected by a row address and a column address which are transmitted separately to the RAM array 80.

Referring still to Figures 2 and 3, the memory controller unit (MCU) 100 preferably comprises a unified control unit which supports a high performance address and data path to both the RAM array 80 and the ROM array 70. The MCU 100 controls access to both the RAM array 80 and the ROM array 70 and connects to the CPU local bus 165 to provide a path to RAM and/or ROM memory for the CPU 125, the BIU 135, and other peripheral components (shown generally as 170). The memory control unit 100 connects to the ROM array 70 and the RAM array 80 through an address bus 55, a data bus 65, and a plurality of control lines, which control the timing and operation of the data transaction to the respective memory device.

Referring now to Figure 3, the MCU 100 preferably includes a cycle and address decoder 225, a data buffer interface 245 connected to memory data bus 65 MDATA(31:0), an address multiplexer 260 connected to the memory address bus 55 MADDRESS(18:0), a RAM controller 250 and a ROM controller 275. An example of a ROM controller is disclosed in our copending application 94309255.1 (TT0313), the disclosure of which is incorporated by reference herein.

The cycle and address decoder 225 preferably connects to the CPU local bus 165 to receive address signals A(31:0) and control signals such as memory read (MRD) and memory write (MWR) therefrom. The cycle and address decoder 225 also connects to the CPU local bus 165, the data buffer interface 245, the RAM controller 250 and the ROM controller 275 to provide output control signals thereto. In addition, the cycle and address decoder provides address signals to the RAM/ROM address multiplexer 260.

The cycle and address decoder 225 preferably includes configuration registers 285, 295, which represent the starting address and size of the ROM array and the RAM array, respectively. Thus, register 285 (the ROM configuration register) includes bits indicating the starting address of the ROM array and bits indicating the size of the ROM array. Similarly, register 295 (the RAM configuration register) includes bits indicating the starting address of the RAM array and bits indicating the size of the RAM array. In the preferred embodiment, a plurality of registers may be provided for the RAM array, with one register dedicated for each bank of memory. Thus, for example, if the RAM array comprises four banks of DRAM devices, four separate configuration registers preferably are provided to indicate the starting address and the size of each bank of RAM.

The data interface buffer 245 connects to the CPU local bus 165 to receive and transmit data signals D(31:0) to and from the CPU local bus 165. Similarly, the data buffer interface 245 connects to the memory data bus MDATA(31:0) to transmit and receive data signals to and from the ROM array 70 and the RAM array 80. The direction in which the data signals are driven preferably is controlled by a read/write (R/W) control signal from the cycle and address decoder 225. The data interface buffer 245 preferably is enabled by controls from the RAM controller 250 or ROM controller 225. As one skilled in the art will understand, the data buffer interface unit 245 may be constructed of a separate interface unit and data buffer, if desired.

The RAM/ROM multiplexer 260 receives address signals from the address decoder 225 and provides the memory address signals MADDRESS(18:0) to the ROM array 70 and RAM array 80. In response to control signals received from the ROM controller 275 or RAM controller 250, the multiplexer 260 determines the manner in which the address signals will be supplied to the appropriate memory array. Thus, in the preferred embodiment, if a control signal is received from the RAM controller 250, the multiplexer 260 multiplexes the address signal from the address decoder 225 to provide a separate row address and column address in accordance with conventional techniques. Conversely, if a control signal is received from the ROM controller 275, the address signal from the address decoder 225 is not multiplexed by the address multiplexer 260, but instead is applied directly to the memory address lines MADDRESS (18:0). The timing of the address multiplexer 260 is controlled by timing signals from the RAM controller 250 or ROM controller 275.

In the preferred embodiment, a RAM address router (not shown) and a ROM address router (not shown) are provided between the cycle and address decoder 225 and the address multiplexer 260. Address signals are provided to the appropriate router from the address decoder 225, based upon whether the address is located in the RAM array or the ROM array (as determined by comparing the address signal with the configuration registers 285, 295). The RAM and ROM routers then appropriately configure the memory address signal MADDRESS(18:0) based upon the particular size and configuration of the RAM and ROM banks, as indicated by configuration registers 285, 295.

Referring now to Figures 2 and 3, the RAM controller 250 and the ROM controller 275 preferably receive control signals from the cycle and address decoder 225 to indicate that a data transaction to RAM or ROM is requested, and also to indicate whether a write or a read cycle is desired. In response to receiving the control signals from the cycle and address decoder 225, the RAM and ROM controllers generate an enable signal to the data buffer interface 245 and a control signal to the RAM/ROM address multiplexer 260. The controllers also generate control signals to the associated memory arrays and buffers to control the transfer and timing of the data transactions.

As shown in Figures 2 and 3, the RAM controller 250 generates a row address strobe signal RAS(3:0), a column address strobe signal CAS (3:0), a RAM buffer enable signal RAMBE to enable the RAM sub-system buffers 83, 88, a memory direction signal MEMDIR to indicate to the memory system data buffer 88 which way to drive out data, and a write enable signal WE to indicate to RAM whether the data transaction is a read or write cycle.

Similarly, the ROM controller 275 generates a ROM chip enable signal ROMCE(3:0) to select the appropriate bank of ROM, ROM output enable signal ROMOE, which provides an output enable for the ROM array, a ROM buffer enable signal ROMBE to enable the ROM sub-system buffers 82, 87, a memory direction signal MEMDIR to indicate to the memory system data buffer 87 which way to drive out data, and a write enable signal WE to indicate to ROM whether the data transaction is a read or write cycle.

Thus, referring still to Figures 2 and 3, the MCU 100 preferably connects to the RAM memory array 80 through address lines MADDRESS(11:0) 55, memory data lines MDATA(31:0) 65, row address strobe ("RAS") lines RAS(3:0), column address strobe ("CAS") lines CAS(3:0), a write enable line WE and a memory direction line MEMDIR. An address signal is transmitted in two segments on the memory address lines MADDRESS(11:0) 55 to select the row and column in RAM to be accessed. The data lines MDATA(31-0) are memory data bus lines for transferring data to and from the RAM circuits and the integrated processor 50, or other external devices, in accordance with conventional techniques. The write enable signal WE indicates whether the memory access is a write cycle and typically is captured from the MRD and MWR control signals on the CPU local bus 165.

In accordance with customary techniques, the row address strobe (RAS) lines (RAS3#-RAS0#) preferably comprise active low outputs that are used by the RAM circuits to clock in row address data from the memory address bus MADDRESS(11:0) for each RAM bank. In the preferred embodiment, one RAS line is dedicated to each bank. Four RAS lines are provided in the preferred embodiment where four RAM banks are used. Similarly, four column address strobe (CAS) lines (CAS3#-CAS0#) are provided as active low outputs that are used by the RAM circuits to clock in column address data from the memory address bus MADDRESS(11:0) for each bank of the RAM bytes, one CAS per byte. Thus, for example, CAS3# is the RAM column address strobe for byte 3 in each RAM bank.

Similarly, the MCU 100 preferably connects to the ROM memory array 70 through address lines MADDRESS(18:0) 55, memory data lines MD(31:0) 65, ROM chip enable lines ROMCE(3:0), ROM output enable line ROMOE, and a write enable line WE. An address signal is transmitted on the memory address lines MADDRESS(18:0) 55 to select the location in ROM to be accessed. The data lines MDATA(31:0) are memory data bus lines for transferring data to and from the RAM circuits and the integrated processor 50, or other external devices, in accordance with conventional techniques. The write enable signal WE indicates whether the memory access is a write cycle and is captured from the MRD and MWR control signals on the CPU local bus 165.

Referring still to Figures 2 and 3, the operation of the present invention will now be described in accordance with the preferred embodiment. The CPU core 125, or the other integrated processor components, including the BIU 135, may perform a data transaction to the memory arrays. In accordance with conventional techniques, the data transaction is initiated by driving an address strobe signal ADS# onto the CPU local bus 165, and at substantially the same time driving an address onto the CPU local bus 165 representing a location in the desired memory array. If the address on the CPU local bus 165 corresponds to a location in either ROM or RAM, the MCU 100 issues a MEMHIT signal onto the CPU local bus 165 to the originating component to claim the cycle. In accordance with the preferred embodiment, the MCU 100 determines if the address signal corresponds to a location in memory by comparing the address signal received by the cycle and address decoder 225 to the information stored in configuration registers 285, 295 representing the starting address and size of the RAM array 80 and ROM array 70. In this manner, the cycle and address decoder 225 also determines if the data transaction is intended for the ROM array 70 or the RAM array 80.

The appropriate control lines (MRD or MWR and M/IO) of the CPU local bus 165 subsequently are driven to indicate that the present cycle is a write (or read) operation to memory or to an input/output device, and data is driven on the CPU local bus (if the transaction is a write cycle). These control signals are received by the cycle and address decoder 225 of the MCU 100.

Once the cycle and address decoder 225 determines that the address is located in either the ROM or the RAM array, the decoder 225 generates an output control signal to the RAM controller 250 or to the ROM 275, depending upon its prior determination of whether the address was intended for the RAM array 80 or the ROM array 70. This control signal includes information as to whether the transaction is a read or write cycle to the appropriate controller. The address decoder 225 also provides the address, or a portion of the address, to the RAM/ROM address multiplexer 260, either directly or through appropriate routing circuitry to reconfigure the address for the particular RAM or ROM arrays being used.

In response to the control signals from the cycle and address decoder 225, the appropriate controller (either the RAM or ROM controller) generates a control signal to the multiplexer 260. If the control signal is received from the RAM controller 250, the address signal from the address decoder 225 is multiplexed in accordance with conventional techniques. If, conversely, the control signal is received from the ROM controller 275, the address signal is not multiplexed, and is applied directly to the ROM array 70. The controllers (RAM or ROM) also generate appropriate control signals to control the transfer and timing of the data transaction in accordance with normal convention.

The cycle and address decoder 225 also generates an output control signal R/W to the data buffer interface 245, indicating whether a read cycle or a write cycle is requested. The status of the R/W signal controls the direction in which data is transferred by buffer interface 245. In the preferred embodiment, as soon as the data signal is captured by data buffer interface 245, the cycle and address decoder 225 drives a BRDY signal onto the local bus 165 to indicate that the MCU 100 is ready for the next cycle. The transfer of the data signal out of the data buffer interface 245 then is controlled by an enable signal from the appropriate controller (RAM or ROM).

Thus, for example, in a write transaction to the RAM array-80, appropriate control signals are transmitted to the RAM controller 250 and data buffer interface 245 from the cycle and address decoder 225 to indicate that a write cycle is desired to RAM, and the appropriate segment of the address signal is provided to the RAM controller 250 to indicate the row and column where the transaction is to occur. The RAM controller 250 provides a control signal to the address multiplexer 260, causing the multiplexer to multiplex the address signal into a row address and a column address. The controller 250 then provides a signal to drive the row address on the memory address lines MADDRESS(11:0), and subsequently asserts the appropriate row address strobe line RAS to enable the RAM array to clock in the row address signals into an internal row address latch. After some predetermined time period, a control signal is generated by the RAM controller 250 to the multiplexer 260 to drive out the column address signals. The RAM controller 250 then asserts the appropriate CAS lines enabling the RAM circuits to clock in the column address.

The RAM controller 250 also provides control signals indicating whether a write or read cycle is to be performed. The RAM controller 250 generates an enable signal to the data buffer interface, to drive out the data signal to be written onto the memory data lines MDATA(31:0). The data signals are received by buffer 88, which is enabled by the RAMBE signal and the MEMDIR signal from the RAM controller 250 to drive the data out of the buffer 86 and into the RAM array 80 after the address has been clocked into the RAM. A similar process occurs for a write cycle to ROM, except that no multiplexing of the address signal is required by address multiplexer 260.

With respect to a read cycle, the cycle and address decoder 225 generates control signals to the appropriate controller depending upon whether the read is to the RAM array 80 or to the ROM array 70. If for example, the read is to the ROM array 80, the ROM controller 250 provides a control signal to the address multiplexer 260, which in response multiplexes the address signal into row and column addresses. The row and column addresses are driven out of the multiplexer 260 by RAM controller 250 in association with the RAS and CAS signals, and the write enable line WE is driven to indicate a read cycle. The cycle and address decoder 275 also indicates to the data buffer interface 245 that a read cycle is requested, to control the direction of the data transfer through the buffer interface 245.

After the data is read out of the RAM array 80 to the buffer 88, the RAM controller 250 provides the RAM buffer enable signal RAMBE and memory direction signal MEMDIR to drive the data onto the memory data lines MDATA(31:0) 65. The RAM controller 250 also provides an enable signal to the data buffer interface 245, causing the data buffer interface to drive out the data signal onto the CPU local bus 165. Once again, a similar process occurs for a read cycle to ROM, except that no multiplexing of the address signal is required by the address multiplexer 260.

Numerous variations and modifications will become apparent to those skilled in the art once the above disclosure is fully appreciated. It is intended that the following claims be interpreted to embrace all such variations and modifications.

## Claims

1. An integrated processor connected to a RAM array and to a ROM array, comprising:
a CPU core connected to a local bus,
a memory controller unit connected to said local bus,
said memory controller unit also connected to said RAM array and to said ROM array;
wherein said memory controller unit includes both a RAM controller and a ROM controller.

2. An integrated processor as in claim 1, wherein said memory controller unit connects to said RAM array and to said ROM over a single set of address lines and/or over a single set of data lines.

3. An integrated processor as in claim 1, wherein said memory controller unit includes an address multiplexer for multiplexing address signals to said RAM array.

4. An integrated processor as in claim 3, wherein said address multiplexer multiplexes the address signals after receiving a signal from said ROM controller.

5. An integrated processor as in claim 4, wherein said address multiplexer directly transmits address signals to said ROM array after receiving a signal from said ROM controller.

6. An integrated processor as in Claim 1, wherein said CPU core drives an address signal on the local bus together with a control signal indicating a read cycle or a write cycle to a memory location identified by the address signal.

7. An integrated processor as in Claim 1, further comprising a bus interface unit connected to said local bus and to a peripheral bus, said bus interface unit driving an address signal on the local bus together with a control signal indicating a read cycle or a write cycle to a memory location identified by the address signal.

8. An integrated processor as in Claim 1, further comprising a peripheral device connected to said local bus, said peripheral device driving an address signal on the local bus together with a control signal indicating a read cycle or a write cycle to a memory location identified by the address signal.

9. An integrated processor connected to a RAM array and to a ROM array, comprising:
a CPU core connected to a local bus;
a memory controller unit connected to said local bus, said memory controller unit also connected to said RAM array and to said ROM array via a common set of address and data lines.

10. An integrated processor as in Claim 9, wherein said memory controller unit generates control signals that are applied directly to the RAM array or ROM array.

11. An integrated processor as in Claim 10, wherein said memory controller unit includes both a RAM controller and a ROM controller.

12. An integrated processor as in claim 11, wherein said RAM controller generates control signals that are applied to the RAM array.

13. An integrated processor as in claim 12, wherein the control signals include row address strobe signals (RAS) and column address strobe signals (CAS).

14. An integrated processor as in claim 11, wherein said ROM controller generates control signals that are applied to the ROM array.

15. An integrated processor as in claim 14, wherein the control signals include ROM chip enable signals (ROMCE).

16. An integrated processor as in claim 11, wherein said memory controller unit also includes a cycle and address decoder connected to said local bus for receiving address and control signals on said local bus, and initializing said RAM controller and/or said ROM controller in response to address signals to said RAM array and said ROM array, respectively.

17. A memory system for minimizing the number of lines required for performing memory transactions, said system comprising:
a memory control unit;
a first memory array;
a second memory array;
wherein said memory control unit connects to said first memory array and to said second memory array via a common set of address and data lines.

18. A memory system as in Claim 17, wherein said first memory array comprises a random access memory array.

19. A memory system as in Claim 18, wherein said second memory array comprises a read only memory array.

20. A memory system as in Claim 18, wherein said second memory array comprises a flash memory array.

21. A memory system as in Claim 17, wherein addresses transmitted from said memory control unit to said first memory array are multiplexed.

22. A memory system as in Claim 17, wherein said memory control unit includes a first controller for controlling the timing and transfer of data to and from said first memory array, and/or a second controller for controlling the timing and transfer of data to and from said second memory array.
